# EUROPEAN PATENT SPECIFICATION

(11) **EP 1 962 218 B1**
(45) Date of publication and mention of the grant of the patent: **17.06.2020**
(21) Application number: 08151640.3
(22) Date of filing: 19.02.2008
(51) Int. Cl.: G06F 21/00, G06F 21/12, G06F 21/64

(54) **METHOD FOR DETECTING THAT A PROTECTED SOFTWARE PROGRAM IS CRACKED**
VERFAHREN ZUM ERKENNEN, DASS EIN GESCHÜTZTES SOFTWAREPROGRAMM GECRACKT WORDEN IST
PROCÉDÉ POUR LA DÉTECTION DU CRAQUAGE D'UN PROGRAMME DE LOGICIEL PROTÉGÉ

(30) Priority: 22.02.2007 US 710282
(43) Date of publication of application: 27.08.2008
(73) Proprietor: SafeNet Data Security (Israel) Ltd., 49511 Petach Tikva (IL)
(72) Inventor: Zunke, Michael, Kirchheim 85551 (DE); Margalit, Yanki, Ramat-Gan 52223 (IL); Margalit, Dany, Ramat Gan (IL)
(74) Representative: Scheer, Luc

(56) References cited:
- US-A1- 2003 188 231
- US-A1- 2005 183 072
- US-A1- 2006 026 569
- US-A1- 2006 156 005
- US-A1- 2006 174 346

## Description

### FIELD OF THE INVENTION

The present invention relates to protecting licensed computer software usage rights, and, in particular, to the detecting of tampering attacks on protected software.

### BACKGROUND OF THE INVENTION

A common way of enforcing a license regarding the usage rights of a software program (herein denoted as a "program") is to furnish the program with executable code that regulates the usage of the program according to the terms and conditions under which the program is licensed to the user. Furnishing the program in such a manner is typically done by embedding the regulating executable code (herein denoted as "protective code") into the program, or, equivalently, by packaging the program and the protective code together within a single computer file (herein denoted as a "file"). Such a program is said to be "protected" within a "protective envelope" (also denoted herein as an "envelope") made up of the protective code. In addition to monitoring and regulating program usage according to the license, the protective code typically performs other functions related to software protection. For example, the program may be encrypted, and may be decrypted by the protective code only immediately before execution. The terms "executable code" and "code" are herein used synonymously and denote instructions, statements, commands, or other directives which may be executed or interpreted by a computer to perform data handling and data processing operations.

When the user runs a protected program by invoking the program's file on the computer, the protective code typically executes to perform initialization functions (such as decryption of the encrypted program, as noted previously). Thereafter, the protective code typically runs simultaneously with the program in the process background to monitor and regulate program usage according to the license terms. Typical license terms govern factors which may include, but are not limited to: the computer(s) on which the program can be run; the number of concurrent users; the time period(s) during which the program can be used; the number of times the program can be used; and the computer resources (e.g., file and network services) which the program can access.

Protected programs, however, are subject to attacks whose goals are to evade the license-regulating mechanisms. In one mode of attack, the attacker seeks to separate the program from the envelope in such a way that the protective code is removed, disabled, or bypassed. If the attack is successful, the program can be run in an unprotected fashion, without any regulation according to the license terms. The user can then operate the program contrary to the license agreement in an unauthorized manner. A program originally provided in an envelope but which has been successfully separated from the envelope in the above-described manner is commonly said to have been "cracked"; it is also commonly said that that protective envelope has been "cracked" - both expressions are taken to denote the same consequences for the program. In addition to allowing the attackers themselves to violate the license, the precise methods of cracking the program are often published in the form of executable code that disables the envelope. Moreover, cracked programs themselves are typically freely distributed, in further violation of the license agreement.

There has been considerable effort made to provide protective code that can withstand such attacks. U.S. Patent Application Publication 2005/0183072 of Horning, et al., titled "Software self-defense systems and methods" (herein denoted as "Horning") provides an overview and survey of many details of cracking attacks and ways of defending the protective code against these attacks through the use of self-defensive programs (SDP's). Unfortunately, continuing advances and changes in technology render many of these techniques short-lived. Many of the methods and approaches of Horning, for example, rely on the ability of a running program to detect that it is being executed under the control of a debugger, and to interfere with the debugger - the presumption is that the attacker will use a debugger to analyze and disable the protective code, and if the protective code can detect this and take evasive action, the attack can be neutralized. Horning's reliance on this presumption, however, ignores the fact that many serious attackers use hardware debuggers which are independent of software and cannot be detected or influenced by the techniques Horning presents.

U.S. Patent 6,463,538 to Elteto, titled "Method of software protection using a random code generator" (herein denoted as "Elteto") implements a defensive technique to thwart cracking attacks on a protected program by randomizing each instance of the protected program so that the protective code will differ substantially from one instance to the next, making it effectively impossible for the attacker to develop (and publish) a crack that would succeed in general for all instances. In theory, Elteto's approach is valid, but in practice it fails to solve the problem, because an attacker need crack only a single instance of the protected program and then publish that cracked instance. Although publishing and distributing an entire program is more involved and cumbersome than publishing only the crack itself, the ever-increasing bandwidth of networks and the ease of network distribution, particularly over the Internet, ultimately make it just as feasible to publish the cracked program instance as it is to publish the crack itself.

The limitations on Horning as well as the failure of Elteto and similar approaches to prevent cracking has led some to conclude that there is no decisive solution to the cracking problem in the realm of self-defensive programs - that self-defensive programming techniques, while useful, can never be sufficient. For example, U.S. Patent Application 2006/0174346 of Carroll, et al. entitled "Instrumentation for alarming a software product" (herein denoted as "Carroll") takes the approach that any software protection can ultimately be broken and discloses a scheme for signaling an alarm over the Internet when a software license is violated. The weakness of Carroll, however, is that there is no provision for directly determining that a protected software application has been cracked. Carroll can only indirectly infer that the program has been cracked by monitoring usage for license violations. There are two principal shortcomings on account of this restriction: First, not all license violations may be readily detectable. For example, an attacker might distribute unauthorized copies of a software program, none of which have means of detecting that they are unauthorized copies, and therefore cannot detect that there are any license violations. Secondly, a software license violation might possibly occur in the absence of any attack on the software's protective envelope, in which case the Carroll system would signal a false alarm.
US 2003/0188231 A1 describes the features of the preamble of claim 1.

There is thus a need for, and it would be highly advantageous to have, a means of directly determining if a protected software program has been cracked. This goal is met by the present invention.

### SUMMARY OF THE INVENTION

It is an objective of the present invention to directly determine if the protective envelope of a software program has been attacked, including, but not limited to:
removal; modification; bypassing; and disabling.

According to embodiments of the present invention, the protective envelope is provided with executable code for generating a confirmation, which · is written to computer memory (also denoted herein as "memory"). Additionally, the program itself is provided with executable code for validating the generated confirmation. The program is thus able to determine if the protective envelope is functioning properly by the results of the validation. In case of a failed validation, the pro ram itself signals anindication that the protective envelope has been attacked, i.e., that the program has been cracked.

According to embodiments of the present invention, the envelope confirmation is generated according to a predetermined confirmation rule, such that validation can be effected in an accurate and timely manner.

Therefore, according to the present invention there is provided a method 10 according to claim 1 and a computer program according to claim 15.

### BRIEF DESCRIPTION OF THE DRAWINGS

The invention is herein described, by way of example only, with reference to the accompanying drawings, wherein:
Figure 1 is a conceptual computer memory map of a prior art protected software program;
Figure 2 is a conceptual computer memory map showing an envelope confirmation and validator according to embodiments of the present invention;
Figure 3 is a flowchart showing the run-time operation of a method according to embodiments of the present invention.

### DESCRIPTION OF THE PREFERRED EMBODIMENTS

The principles and operation of a method according to the present invention for detecting that a protected software program is cracked, may be understood with reference to the drawings and the accompanying description.

### Additional Definitions

In addition to definitions of terms appearing elsewhere herein, there are the following term definitions:
"Envelope confirmation" (also denoted as a "confirmation") - an item of information originated by a protective envelope, whose purpose is to confirm that the envelope exists and is operational. In the context of the present invention, an envelope confirmation is not necessarily secure. The term "secure confirmation" herein denotes a confirmation that is protected against impersonation through means known in the art, including, but not limited to: encryption; digital signatures; one-way functions; challenge-response; and passwords.
"Envelope confirmation generator" (also denoted as a "confirmation generator") - an entity that generates an envelope confirmation. In particular, the term "envelope confirmation generating code" herein denotes executable code which functions as a confirmation generator, i.e., is operative to generate a confirmation.
"Envelope confirmation rule" (also denoted as a "confirmation rule" or a "rule") - a predetermined specification that governs the format and/or content of an envelope confirmation. Envelope confirmation rules include, but are not limited to: mathematical functions; date and time functions; string functions; and data manipulations.
"Envelope confirmation validation" (also denoted as an "envelope validation" or a "validation") - a step or process for determining that a particular item of information is an envelope confirmation and hence establishes that a protective envelope exists and is operational. Even if the envelope confirmation is not a secure confirmation, a validation is, in general, required to recognize the envelope confirmation as certifying that a protective envelope exists and is operational. According to embodiments of the present invention, validation of an envelope confirmation is performed by a program which is provided with a protective envelope. According to embodiments of the present invention, a validation has two possible mutually-exclusive outcomes:
   (1) either the validation establishes that the envelope confirmation conforms to the predetermined envelope confirmation rule (herein denoted as a "successful validation"); or
   (2) the validation establishes that the envelope confirmation does not conform to the predetermined envelope confirmation rule (herein denoted as a "failed validation").
"Envelope confirmation validator" (also denoted as a "confirmation validator" or "validator") - an entity that performs an envelope validation. The term "envelope confirmation validation code" (also denoted as "envelope validation code") herein denotes executable code which functions as a validator, i.e., is operative to perform a validation.

The term "computer" herein denotes any device or apparatus capable of executing data processing instructions, including, but not limited to: personal computers; mainframe computers; servers; workstations; data processing systems and clusters; networks and network gateways, routers, switches, hubs, and nodes; embedded systems; processors, terminals; personal digital appliances (PDA); controllers; communications and telephonic devices; and memory devices, storage devices, interface devices, smart cards and tags, security devices, and security tokens having data processing and/or programmable capabilities. The term "running" in the context of executable software loaded on a computer herein denotes that the software is executing within a process of the computer, including, but not limited to, a background process.

### Method Operation

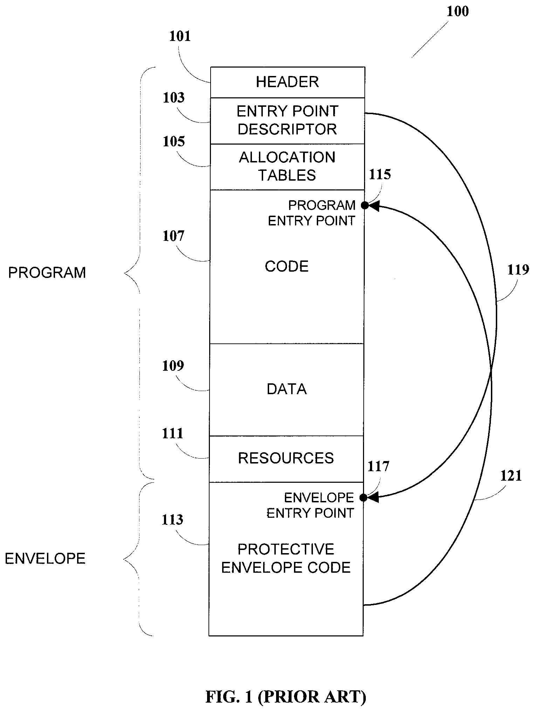

Figure 1 is a conceptual computer memory map of a prior art protected software program **100**, having a program header **101**, an entry point descriptor **103**, allocation tables **105**, a code section **107**, a data section **109**, and resources **111.** In code section **107** there is a program entry point **115**, where the code initiating program operation is located. Program **100** is protected by protective envelope code **113**, which has an envelope entry point **117**, where the code initiating envelope operation is located. When protected program **100** is launched, entry point descriptor specifies a jump **119** to envelope entry point **115** to begin execution of protective envelope code **113.** After protective envelope code **113** initializes, a jump **121** is made to program entry point **115** to begin regular program operation.

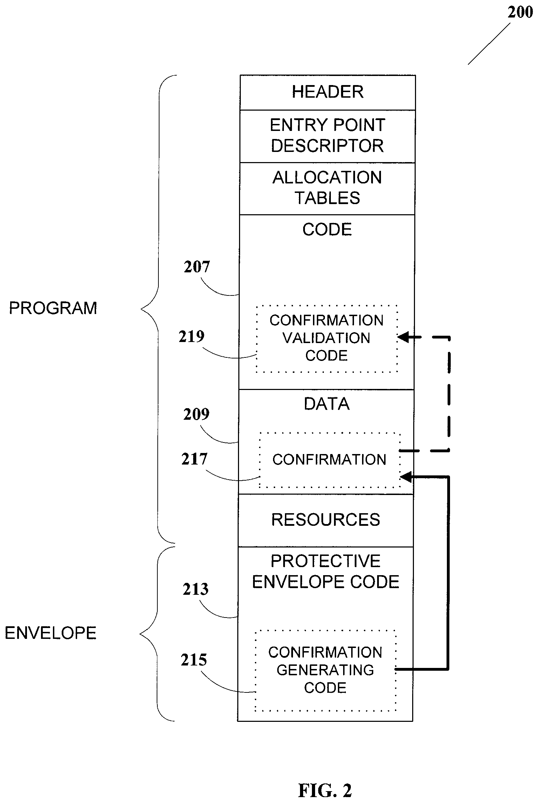

Figure 2 is a conceptual computer memory map of a protected software program **200** according to embodiments of the present invention. Protective envelope code **213** contains confirmation generating code **215**, which generates a confirmation **217** in computer memory. A code section **207** contains confirmation validation code **219**, which validates confirmation **217.**

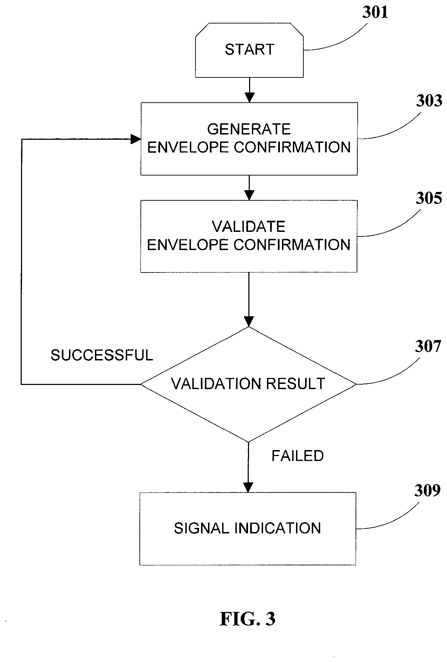

Figure 3 is a flowchart showing the run-time operation of a method according to embodiments of the present invention. After a start point **301**, an envelope confirmation (confirmation **217** in Figure 2) is generated in a step **303** by confirmation generating code **215** (Figure 2). Next, in a step **305**, the confirmation is validated by confirmation validation code **219** (Figure 2). At a decision point **307**, the results of the validation are evaluated. If the validation is successful, the process continues by repeating envelope confirmation generation step **303.** If the validation has failed, however, the process signals an indication in a step **309.**

In an embodiment of the present invention, confirmation **217** is written into program memory. In another embodiment of the present invention, confirmation **217** is written into a data section **209**, as shown in Figure 2. In other embodiments of the present invention, confirmation **217** can be written into other areas of computer memory that are accessible to both confirmation generating code **215** and confirmation validation code **219.** In still further embodiments of the present invention, confirmation **217** is written to a memory storage area of the computer, including, but not limited to an operating system registry storage. In the present context, memory storage areas of the computer are considered to be "computer memory", and are denoted as such, even if the storage areas are contained in devices such as disk drives.

In additional embodiments of the present invention, the envelope confirmation includes a data variable of the program. In this fashion, the envelope confirmation may be conveniently hidden from potential attackers, who typically preserve all data variables of the program intact so as to insure proper program operation.

### Confirmation Rules

In order to achieve efficient and accurate validation, embodiments of the present invention provide for a confirmation to be generated according to a predetermined rule. In this manner, a validator for the confirmation attempts to verify that the confirmation was generated according to the predetermined rule, and the decision of whether the validation was a successful validation or a failed validation is based on whether or not the confirmation agrees with the predetermined rule.

In a non-limiting embodiment of the present invention, the confirmation is based on a time-stamp; in a related embodiment, the confirmation includes a time-stamp. In this embodiment, the confirmation generating code periodically writes a time-stamp as the confirmation. The term "time-stamp" herein denotes recorded information containing the calendar date and clock time (for example, the local date and clock time) in a predetermined format and with a predetermined resolution, and which was current to a reasonable degree of accuracy at the time of the creation and recording of the information. Non-limiting examples of time-stamps conforming to the foregoing definition and suitable for use in embodiments of the present invention are found in the Internet Society's published document *RFC 3161 Internet X.509 Public Key Infrastructure Time-Stamp Protocol (TSP).* According to embodiments of the present invention, the confirmation validation code compares the confirmation to the actual time, and if the confirmation is sufficiently close to the actual time (within a predetermined interval, for example), then the confirmation is deemed to have been successfully validated. If the confirmation is missing or significantly out-of-date (outside of the predetermined interval, for example), then the confirmation is deemed to have a failed validation.

### Including Computer and User Information within the Envelope Confirmation

In an embodiment of the present invention, information about the computer and/or the user is included within the envelope confirmation, including, but not limited to: data related to the configuration of the computer; a network address of the computer, machine name, MAC address, hard drive serial number; and personal data related to the user of the computer, including username. In related embodiment, a function of this information is included within the envelope confirmation. Such a function may be a cryptographic function of the information.

In many cases, an attacker outputs a memory dump of an executing program to a file in order to crack the program. This is advantageous to the attacker, because doing so may allow capture of the decrypted (and operational) executable code of an encrypted program without having to break the encryption itself (the protective envelope does the decryption before loading the image into computer memory). However, by including information about the computer and the user, as described above, the attacker may unknowingly also dump information about himself and his computer into the output file, especially if the information is encrypted so that the attacker cannot easily determine that such information about him and his computer is in the output file. Therefore, by examining the cracked file, extracting the computer-related data from the envelope confirmation, and analyzing the computer-related data (using the appropriate decryption keys, as necessary), it may be possible for the licensor to gain information about the identity of the computer and/or the attacker himself, to aid in enforcement of the license.

Further information regarding providing information related to an attacker involved in an attack on protected software is disclosed in the co-pending US Patent Application of the present' inventors entitled "Self-defensive protected software with suspended latent license enforcement", which was filed simultaneously with the present application.

### Interrupt-driven Confirmation Generation and Validation

An embodiment of the present invention provides for triggering the generation of a confirmation and the validation thereof via an interrupt, including, but not limited to a software interrupt. According to this embodiment, the interrupt insures that confirmation generation and validation are performed frequently and in a timely manner. In a related embodiment of the present invention, the interrupt is initiated periodically, based on a predetermined time-interval. For example, a repeating interrupt could be triggered every ten seconds to generate and validate a confirmation. In this case, a time-stamp-based confirmation would have to be within ten seconds of the actual time in order to achieve a successful validation.

### Confirmation Rule Argument

In an embodiment of the present invention, the validation code supplies a data argument to the confirmation generating rule. In a non-limiting example, the validation code supplies a random number as an argument, and the envelope confirmation rule is a predetermined function of the argument. The validator in turn attempts to verify that the confirmation is the predetermined function of the supplied argument. In order to do this, additional computer memory accessible to both the program and to the protective envelope is provided for storing the argument, and argument-generating code is also provided to the program, by which an argument is generated according to a predetermined rule. The argument-generating code is executed to generate the argument, which is subsequently used as an input to the envelope confirmation-generating code when generating the envelope confirmation. In a further embodiment of the present invention, the envelope confirmation rule includes a one-way function of the envelope confirmation argument. This increases the security of the envelope confirmation by making it difficult to deduce the argument from the confirmation.

### Secure Confirmation

Certain embodiments of the present invention provide for increased security of the confirmation. In an embodiment of the present invention, the confirmation is encrypted, and validation includes decrypting the confirmation. Note that this is in addition to having the protective envelope decrypt an encrypted program. In another embodiment of the present invention, the confirmation is signed according to a digital signature scheme, and the validation includes verifying the digital signature. Further embodiments of the present invention provide for one or more passwords and a challenge-response mechanism.

In order to implement a secure envelope confirmation, embodiments of the present invention provide for including a function of a random number and/or a counter in the envelope confirmation.

### Signaling an Indication that the Program is Cracked

The present invention provides a variety of signals to indicate a cracked program. In an embodiment of the present invention, if the program detects that the protective envelope has been cracked, then a data value is set in the computer. Another program or entity can inspect the data value to determine if the program has been cracked. In another embodiment of the present invention, an output of display data is made on the computer. A non-limiting example of this embodiment is the display of a visual warning notification to the user. In addition to notifying the user that the program is being used in violation of the license agreement, the display data may also warn the user that the integrity of the program is no longer assured and that there may be a risk of virus infection as well.

In another embodiment of the present invention, the program may send a message that the protective envelope has been cracked. This message may be sent via the operating system to another program (e.g., .a license manager, which could take further action to enforce the license). In yet another embodiment, the message is sent from the computer to another computer (e.g., a license server, which could take further action to enforce the license). In a further embodiment, the message is sent over a network, including, but not limited to the Internet (e.g., to the licensor who licenses the program, for taking further action to enforce the license).

In still another embodiment of the present invention, the message includes at least a part of the envelope confirmation itself - even if the validation indicates that the envelope confirmation does not conform to the predetermined envelope confirmation rule. In cases where the envelope confirmation contains information about the computer and the user, this may reveal information related to the identity of the attacker (as detailed above). When sent as a message to the program licensor, such information may aid in license enforcement.

### Configurations

In a preferred embodiment of the present invention, the executable code for generating and validating the envelope confirmation all execute on the same computer on which the protected program is loaded and running. In another embodiment, the executable code for generating the envelope confirmation and/or the executable code for validating the confirmation execute on an external computer which is connected to, and which is different from, the computer on which the protected program is loaded and running. In this other embodiment, the external computer can be a device having data processing and/or programmable capabilities, including, but not limited to a security device or token, or a licensing device or token.

### Computer Program Product

A further embodiment of the present invention provides a computer program product for performing the foregoing method or any variant derived therefrom. A computer program product according to this embodiment includes a set of executable commands for a computer, and is incorporated within machine-readable media including, but not limited to: magnetic media; optical media; computer memory; semiconductor memory storage; flash memory storage; and a computer network. The terms "perform", "performing", etc., and "run", "running", when used with reference to a computer program product herein denote the action of a computer when executing the computer program product, as if the computer program product were performing the actions. The term "computer" herein denotes any data processing apparatus capable of, or configured for, executing the set of executable commands to perform the foregoing method, including, but not limited to the devices as previously described as denoted by the term "computer".

While the invention has been described with respect to a limited number of embodiments, .it will be appreciated that many variations, modifications and other applications of the invention may be made.

## Claims

1. A method for detecting that a software program (200) protected with a protective envelope is cracked, comprising:
• a) providing a memory of a computer, as a computer memory, with a protected software program code, the protected software program code including a software program code (207) and a protective envelope code (213);
• b) providing an executable envelope confirmation generating code (215) within the protective envelope code;
• c) providing an executable envelope confirmation validation code (219) within the software program code,
**characterized in that** the method further comprises:
• d) executing the envelope confirmation generating code to generate a time-stamp, as an envelope confirmation allowing to confirm that the protective envelope code exists and is operational, and storing the envelope confirmation in the computer memory;
• e) executing the envelope confirmation validation code to analyze whether the envelope confirmation is or is not comprised within a predetermined time interval of the actual time, the envelope confirmation validation allowing to validate the envelope confirmation;
• f) signaling an indication that the protected software program is cracked if the envelope confirmation is either missing or not comprised within the predetermined time interval of the actual time; and
• g) repeating periodically the step d) of execution of the envelope confirmation generating code and the step e) of execution of the envelope confirmation validation code if the envelope confirmation is comprised within the time interval of the actual time.

2. The method according to claim 1, wherein the protected software program code is loaded on the computer, and both of the executable envelope confirmation generating code and the envelope confirmation validation code are executed by one and the same computer wherein the protected software program code is loaded.

3. The method according to claim 1 or 2, wherein the computer memory is selected from the group consisting of: a program memory; a data section; and an operating system registry storage.

4. The method according to any previous claim, wherein the protected software program code is encrypted and the protective envelope is operative to decrypt the protected software program code.

5. The method according to any previous claim, further **characterized in that** the signaling of an indication that the software program is cracked comprises setting a data value in the computer.

6. The method according to any previous claim, further **characterized in that** the indication comprises output of displayed data on the computer.

7. The method according to any previous claim, further **characterized in that** the signaling of an indication that the software program is cracked comprises sending a message originating from the software program.

8. The method according to claim 7, further **characterized in that** the message comprises at least part of the envelope confirmation.

9. The method according to claim 8, further **characterized in that** the envelope confirmation also comprises a function of data related to the computer, selected from the group consisting of:
▪ data related to the configuration of the computer;
▪ a network address of the computer;
▪ a machine name;
▪ a MAC address;
▪ a hard drive serial number;
▪ a username; and
▪ personal data related to a user of the computer.

10. The method according to claim 9, further **characterized by**:
• extracting the data related to the computer from the envelope confirmation; and
• analyzing the data related to the computer to obtain information about at least one of: the computer; and the user of the computer.

11. The method according to any previous claim, further **characterized in that** the envelope confirmation is a secure confirmation, the secure confirmation being secured by at least one element selected from a group comprising:
• an encryption;
• a digital signature;
• a challenge-response;
• a password.

12. The method according to any previous claim, further **characterized by**:
• providing an additional computer memory for storing an envelope confirmation argument;
• providing an executable envelope confirmation argument generating code within the software program code, the envelope confirmation argument generating code being operative to generate the envelope confirmation argument according to a predetermined envelope confirmation argument rule;
• executing the envelope confirmation argument generating code to generate the envelope confirmation argument according to the envelope confirmation argument rule, and storing the envelope confirmation argument in the additional computer memory; and
• using the envelope confirmation argument as an input to the envelope confirmation generating code.

13. The method according to claim 12, further **characterized in that** the envelope confirmation argument rule comprises a one-way function of the envelope confirmation argument.

14. The method according to claim 12 or 13, wherein the envelope confirmation argument includes a random number.

15. A computer program product operative to perform the method according to any previous claim.

## Patentansprüche

1. Verfahren zum Erkennen, dass ein mit einem schutzenden nvelope geschütztes Softwareprogramm (200) gecrackt wurde, umfassend:
• a) das Bereitstellen eines Speichers eines Computers als Computerspeicher mit einem geschützten Softwareprogrammcode, wobei der geschützte Softwareprogrammcode einen Softwareprogrammcode (207) und einen schutzenden Envelope-Code (213) beinhaltet;
• b) das Bereitstellen eines ausführbaren Codes zum Generieren einer Envelope-Bestätigung (215) innerhalb des schutzenden Envelope-Codes;
• c) das Bereitstellen eines ausführbaren Codes zur Validierung der Envelope-Bestätigung (219) innerhalb des Softwareprogrammcodes,
**dadurch gekennzeichnet, dass** das Verfahren ferner umfasst:
• d) das Ausführen des Codes zum Generieren einer Envelope-Bestätigung zum Generieren eines Zeitstempels als Envelope-Bestätigung, mit dem bestätigt werden kann, dass der schützende Envelope-Code vorhanden und funktionfähig ist, und das Speichern der Envelope-Bestätigung im Computerspeicher;
• e) das Ausführen des Codes zur Validierung der Envelope-Bestätigung, um zu analysieren, ob die Envelope-Bestätigung innerhalb eines vorbestimmten Zeitintervalls der tatsächlichen Zeit enthalten ist oder nicht, wobei die Validierung für die Envelope-Bestätigung die Validierung der Envelope-Bestätigung ermöglicht;
• f) das Signalisieren einer Angabe, dass das geschützte Softwareprogramm gecrackt wurde, wenn die Envelope-Bestätigung entweder fehlt oder nicht innerhalb des vorbestimmten Zeitintervalls der tatsächlichen Zeit enthalten ist; und
• g) das periodische Wiederholen des Schritts d) der Ausführung des Codes zum Generieren einer Envelope-Bestätigung und des Schritts e) der Ausführung des Codes zur Validierung der Envelope-Bestätigung, wenn die Envelope-Bestätigung innerhalb des Zeitintervalls der tatsächlichen Zeit enthalten ist.

2. Verfahren nach Anspruch 1, wobei der geschützte Softwareprogrammcode auf den Computer geladen wird und sowohl der ausführbare Code zum Generieren einerfür die Envelope-Bestätigung als auch der Code zur Validierung der Envelope-Bestätigung von einem und demselben Computer ausgeführt werden, auf dem der geschützte Softwareprogrammcode geladen ist.

3. Verfahren nach Anspruch 1 oder 2, wobei der Computerspeicher ausgewählt ist aus der Gruppe, bestehend aus: einem Programmspeicher; einen Datenabschnitt; und einen Betriebssystemregistrierungsspeicher.

4. Verfahren nach einem der vorhergehenden Ansprüche, wobei der geschützte Softwareprogrammcode verschlüsselt ist und der schützende Envelope in der Lage ist, den geschützten Softwareprogrammcode zu entschlüsseln.

5. Verfahren nach einem der vorhergehenden Ansprüche, ferner **dadurch gekennzeichnet, dass** das Signalisieren einer Angabe, dass das Softwareprogramm gecrackt wurde, das Einstellen eines Datenwerts im Computer umfasst.

6. Verfahren nach einem der vorhergehenden Ansprüche, ferner **dadurch gekennzeichnet, dass** die Angabe die Ausgabe von auf dem Computer angezeigten Daten umfasst.

7. Verfahren nach einem der vorhergehenden Ansprüche, ferner **dadurch gekennzeichnet, dass** das Signalisieren einer Angabe, dass das Softwareprogramm gecrackt wurde, das Senden einer Nachricht umfasst, die vom Softwareprogramm stammt.

8. Verfahren nach Anspruch 7, ferner **dadurch gekennzeichnet, dass** die Nachricht mindestens einen Teil der Envelope-Bestätigung umfasst.

9. Verfahren nach Anspruch 8, ferner **dadurch gekennzeichnet, dass** die Envelope-Bestätigung auch eine computerbezogene Funktion von Daten umfasst, ausgewählt aus der Gruppe, bestehend aus:
▪ Daten in Bezug auf die Konfiguration des Computers;
▪ einer Netzwerkadresse des Computers;
▪ einem Computernamen;
▪ einer MAC-Adresse;
▪ einer Seriennummer der Festplatte;
▪ einem Benutzernamen; und
▪ personenbezogenen Daten eines Benutzers des Computers.

10. Verfahren nach Anspruch 9, ferner **gekennzeichnet durch**:
• das Extrahieren der computerbezogenen Daten aus der Envelope-Bestätigung; und
• das Analysieren der computerbezogenen Daten, um Informationen über mindestens eines der folgenden Elemente zu erhalten: den Computer; und den Benutzer des Computers.

11. Verfahren nach einem der vorhergehenden Ansprüche, ferner **dadurch gekennzeichnet, dass** die Envelope-Bestätigung eine sichere Bestätigung ist, wobei die sichere Bestätigung durch mindestens ein Element gesichert ist, das aus einer Gruppe ausgewählt ist, umfassend:
• eine Verschlüsselung;
• eine digitale Signatur;
• eine Anfrage/Antwort;
• ein Passwort.

12. Verfahren nach einem der vorhergehenden Ansprüche, ferner **gekennzeichnet durch**:
• das Bereitstellen eines zusätzlichen Computerspeichers zum Speichern eines Envelope-Bestätigungsarguments;
• das Bereitstellen eines Codes zum Generieren eines ausführbaren Envelope-Bestätigungsarguments innerhalb des Softwareprogrammcodes, wobei der Code zum Generieren des Envelope-Bestätigungsarguments in der Lage ist, das Envelope-Bestätigungsargument gemäß einer vorbestimmten Envelope-Bestätigungsargumentregel zu generieren;
• das Ausführen des Codes zum Generieren des Envelope-Bestätigungsarguments, um das Envelope-Bestätigungsargument gemäß der Envelope-Bestätigungsargumentregel zu generieren, und das Speichern des Envelope-Bestätigungsarguments im zusätzlichen Computerspeicher; und
• das Verwenden des Envelope-Bestätigungsarguments als Eingabe für den Code zum Generieren der Envelope-Bestätigung.

13. Verfahren nach Anspruch 12, ferner **dadurch gekennzeichnet, dass** die Envelope-Bestätigungsargumentregel eine Einwegfunktion des Envelope-Bestätigungsarguments umfasst.

14. Verfahren nach Anspruch 12 oder 13, wobei das Envelope-Bestätigungsargument eine Zufallszahl einschließt.

15. Computerprogrammprodukt, das in der Lage ist, das Verfahren nach irgendeinem der vorhergehenden Ansprüche auszuführen.

## Revendications

1. Procédé pour détecter qu'un programme logiciel (200) protégé par une enveloppe de protection est piraté, comprenant :
• a) fournir à une mémoire d'un ordinateur, en tant que mémoire d'ordinateur, un code de programme logiciel protégé, ledit code de programme logiciel protégé incluant un code de programme logiciel (207) et un code d'enveloppe de protection (213) ;
• b) fournir un code exécutable de génération d'une confirmation d'enveloppe (215) au sein du code d'enveloppe de protection ;
• c) fournir un code exécutable de validation de la confirmation d'enveloppe (219) au sein du code de programme logiciel,
**caractérisé en ce que** ledit procédé comprend en outre :
• d) exécuter le code de génération d'une confirmation d'enveloppe pour générer un horodatage, en tant qu'une confirmation d'enveloppe permettant de confirmer que le code d'enveloppe de protection existe et est opérationnel, et mémoriser la confirmation d'enveloppe dans la mémoire d'ordinateur ;
• e) exécuter le code de validation de la confirmation d'enveloppe pour analyser si la confirmation d'enveloppe est ou non comprise dans un intervalle prédéterminé de temps du temps réel, la validation de la confirmation d'enveloppe permettant de valider la confirmation d'enveloppe ;
• f) signaler une indication que le programme logiciel protégé est piraté si la confirmation d'enveloppe est soit manquante, soit non comprise dans l'intervalle prédéterminé de temps du temps réel ; et
• g) répéter périodiquement l'étape d) d'exécution du code générant la confirmation d'enveloppe et de l'étape e) d'exécution du code de validation de la confirmation d'enveloppe lorsque la confirmation d'enveloppe est comprise au sein de l'intervalle de temps du temps réel.

2. Procédé selon la revendication 1, dans lequel le code de programme logiciel protégé est chargé sur l'ordinateur, et le code exécutable de génération d'une confirmation d'enveloppe et le code de validation de la confirmation d'enveloppe sont tous deux exécutés par un seul et même ordinateur, dans lequel le code de programme logiciel protégé est chargé.

3. Procédé selon la revendication 1 ou 2, dans lequel la mémoire d'ordinateur est sélectionnée dans le groupe constitué par : une mémoire de programme ; une section de données ; et une mémoire de registre du système d'exploitation.

4. Procédé selon l'une quelconque des revendications précédentes, dans lequel le code de programme logiciel protégé est chiffré et l'enveloppe de protection est opérationnelle pour déchiffrer le code de programme logiciel protégé.

5. Procédé selon l'une quelconque des revendications précédentes, **caractérisé en outre en ce que** la signalisation d'une indication que le programme logiciel est piraté comprend une configuration d'une valeur de données dans l'ordinateur.

6. Procédé selon l'une quelconque des revendications précédentes, **caractérisé en outre en ce que** l'indication comprend une sortie des données affichées sur l'ordinateur.

7. Procédé selon l'une quelconque des revendications précédentes, **caractérisé en outre en ce que** la signalisation d'une indication que le programme logiciel est piraté comprend un envoi d'un message provenant du programme logiciel.

8. Procédé selon la revendication 7, **caractérisé en outre en ce que** le message comprend au moins une partie de la confirmation d'enveloppe.

9. Procédé selon la revendication 8, **caractérisé en outre en ce que** la confirmation d'enveloppe comprend également une fonction de données liées à l'ordinateur, sélectionnées dans le groupe constitué par :
▪ des données liées à la configuration de l'ordinateur ;
▪ une adresse réseau de l'ordinateur ;
▪ un nom de machine ;
▪ une adresse MAC ;
▪ un numéro de série du disque dur ;
▪ un nom utilisateur ; et
▪ de données à caractère personnel liées à un utilisateur de l'ordinateur.

10. Procédé selon la revendication 9, **caractérisé en outre par** :
• extraire des données liées à l'ordinateur provenant de la confirmation d'enveloppe ; et
• analyser des données liées à l'ordinateur pour obtenir des informations sur au moins l'un de : l'ordinateur ; et l'utilisateur de l'ordinateur.

11. Procédé selon l'une quelconque des revendications précédentes, **caractérisé en outre en ce que** la confirmation d'enveloppe est une confirmation sécurisée, ladite confirmation sécurisée étant sécurisée par au moins un élément sélectionné dans un groupe comprenant :
• un chiffrement ;
• une signature numérique ;
• un défi-réponse ;
• un mot de passe.

12. Procédé selon l'une quelconque des revendications précédentes, **caractérisé en outre par**:
• fournir une mémoire d'ordinateur supplémentaire pour mémoriser un argument de confirmation d'enveloppe ;
• fournir un code exécutable de génération d'un argument de confirmation d'enveloppe au sein du code de programme logiciel, ledit code de génération d'un argument de confirmation d'enveloppe étant opérationnel pour générer l'argument de confirmation d'enveloppe selon une règle d'argument de confirmation d'enveloppe prédéterminée ;
• exécuter le code de génération d'un argument de confirmation d'enveloppe pour générer l'argument de confirmation d'enveloppe selon la règle d'argument de confirmation d'enveloppe, et mémoriser l'argument de confirmation d'enveloppe dans la mémoire d'ordinateur supplémentaire ; et
• utiliser l'argument de confirmation d'enveloppe en tant qu'entrée dans le code de génération de la confirmation d'enveloppe.

13. Procédé selon la revendication 12, **caractérisé en outre en ce que** la règle d'argument de confirmation d'enveloppe comprend une fonction unidirectionnelle de l'argument de confirmation d'enveloppe.

14. Procédé selon la revendication 12 ou 13, dans lequel l'argument de confirmation d'enveloppe inclut un nombre aléatoire.

15. Produit de programme d'ordinateur fonctionnant pour mettre en œuvre le procédé selon l'une quelconque des revendications précédentes.
